# EUROPÄISCHE PATENTSCHRIFT

(11) **EP 0 981 574 B1**
(45) Veröffentlichungstag und Bekanntmachung des Hinweises auf die Patenterteilung: **06.09.2000**
(21) Anmeldenummer: 97923073.7
(22) Anmeldetag: 14.05.1997
(51) Int. Cl.: C08J 9/16, C08J 9/00, C08J 9/14

(54) **GRAPHITPARTIKEL ENTHALTENDE EXPANDIERBARE STYROLPOLYMERISATE**
EXPANDABLE STYRENE POLYMERS CONTAINING GRAPHITE PARTICLES
POLYMERISATS DE STYRENE EXPANSIBLES CONTENANT DES PARTICULES DE GRAPHITE

(43) Veröffentlichungstag der Anmeldung: 01.03.2000
(73) Patentinhaber: BASF AKTIENGESELLSCHAFT, 67056 Ludwigshafen (DE)
(72) Erfinder: GLÜCK, Guiscard, D-55129 Mainz (DE); HAHN, Klaus, D-67281 Kirchheim (DE); KAEMPFER, Knut, D-67065 Ludwigshafen (DE); NAEGELE, Dieter, D-67550 Worms (DE); BRAUN, Frank, D-67063 Ludwigshafen (DE)
(86) Internationale Anmeldenummer: EP9702458
(87) Internationale Veröffentlichungsnummer: WO9851735

(56) Entgegenhaltungen:
- EP-A- 0 372 343
- WO-A-96/34039
- WO-A-97/45477
- DE-U- 29 616 361
- DE-U- 29 616 362
- GB-A- 1 048 865
- CHEMICAL ABSTRACTS, vol. 106, no. 8, 23.Februar 1987 Columbus, Ohio, US; abstract no. 50820, MISHIMA, SEIZO ET AL: "Carbon black-containing polystyrene beads" XP002051838 & JP 61 171 705 A (HITACHI CHEMICAL CO., LTD., JAPAN)

## Beschreibung

Die Erfindung betrifft teilchenförmige, Graphitpartikel enthaltende expandierbare Styrolpolymerisate in Partikelform, ihre Herstellung sowie daraus hergestellte Schaumstoffe.

Polystyrolpartikelschaumstoffe sind seit langer Zeit bekannt und haben sich auf vielen Gebieten bewährt. Die Herstellung derartiger Schaumstoffe erfolgt durch Aufschäumen von mit Treibmitteln impragnierten Polystyrolpartikeln und das nachfolgende Verschweißen der so hergestellten Schaumpartikel zu Formkörpern. Ein wesentliches Einsatzgebiet ist die Wärmedämmung im Bauwesen.

Bei vielen Anwendungen von Schaumstoffen, insbesondere im Bauwesen, wird gefordert, daß die Schaumstoffe selbstverlöschend sind. Es ist zwar bekannt, daß dies durch Zusatz von Flammschutzmitteln, z.B. von Bromverbindungen erreicht werden kann; ob ein Schaumstoff einen bestimmten Brandtest besteht, hängt jedoch von verschiedenen Faktoren, wie Zusammensetzung und Dichte des Schaumstoffs, Art und Menge des Flammschutzmittels, sowie Art und Menge weiterer Zusatzstoffe ab.

Die zur Wärmedämmung eingesetzten Schaumstoffplatten aus Polystyrolpartikelschaum haben zumeist Dichten von mindestens 30 g/l, da bei diesen Dichten die Wärmeleitfähigkeit des Polystyrolpartikelschaums ein Minimum aufweist. Aus Gründen der Materialeinsparung ware es wünschenswert, Schaumstoffplatten mit geringeren Dichten, insbesondere ≤ 15 g/l, zur Wärmeisolation einzusetzen. Die Herstellung derartiger Schaumstoffe ist technisch kein Problem. Derartige Schaumstoffplatten mit geringerer Dichte weisen jedoch eine drastisch verschlechterte Wärmedammfahigkeit auf, so daß sie die Anforderungen der Wärmeleitklasse 035 (DIN 18 164, Teil 1) nicht erfüllen.

Nun ist es bekannt, die Wärmeleitfähigkeit von Schaumstoffen durch Einbau von athermanen Materialien, wie Ruß, Metalloxiden, Metallpulver oder Farbstoffpigmenten, zu vermindern.

So werden in EP-A 372 343 Polystyrolschaumstoffe beschrieben, die 1 bis 25 Gew.-% Ruß enthalten. Der Ruß hat eine Partikelgröße von 10 bis 100 nm und eine Oberfläche von 10 bis 1500 m²/g. Die dort beschriebenen Polystyrolschaumstoffe werden vorwiegend nach dem Extrusionsverfahren hergestellt und weisen vorzugsweise eine Dichte von 32 - 40 g/l, wie sie für diese Schäume typisch ist, auf. Der Zusatz von Flammschutzmitteln wird zwar erwähnt; die in den Beispielen beschriebenen Polystyrol-Partikelschaumstoffe mit einem Gehalt von 1,7 Gew.-% Hexabromcyclododecan bestehen jedoch den Brandtest B2 nach DIN 4102) nicht.

In WO 94/13721 werden ähnliche Schaume beschrieben, wobei die Größe der Rußpartikel > 150 nm ist.

In EP-A 620 246 werden Formkörper aus Polystyrol-Partikelschaum beschrieben, die ein partikelformiges athermanes Material, insbesondere Ruß, daneben aber auch Graphit, enthalten. Die Dichte der Formkörper liegt unter 20 g/l. Bevorzugt erfolgt das Einarbeiten der Partikel in die Formkorper durch Oberflächenbeschichtung der vorgeschäumten Polystyrolperlen oder durch Einbetten in das noch nicht aufgeschäumte Polystyrol-Granulat. Diese Verteilung der Partikel an der Oberfläche führt jedoch zu einer starken Verschlechterung der Verschweißung der vorgeschäumten Perlen und folglich zu Schaumstoffen geringer Güte, außerdem kann es zu einem Abrieb von der Oberflache des Formkorpers kommen. Die Partikel sind in beiden Fällen jedenfalls nicht homogen im Innern der Polystyrolteilchen verteilt; ein Zusatz von Flammschutzmitteln ist nicht beschrieben.

Ein ähnliches Verfahren beschreibt die GB-A 1 588 314, wonach antistatische Polystyrolschaumstoffe durch Beschichten von ungeschäumten oder vorgeschäumten Partikeln mit einer Graphit-Suspension hergestellt werden.

Die Druckschriften DE-U 2 9616 361 und DE-U 29 616 362 betreffen Polystyrol-Partikelschäume, die 2 bis 10 Gew.-% Ruß oder Graphit, vorzugsweise Flammruß mit einer Partikelgröße 80 bis 120 nm enthalten. Die GB-A-1 048 865 beschreibt geformte Artikel aus Polystyrolschaum mit mindestens 10 Gew.-% Füllstoff (Graphit).

Der Erfindung lag die Aufgabe zugrunde, Graphitpartikel enthaltende expandierbare Styrolpolymerisate bereitzustellen, die zu Polystyrolpartikelschaumen sowohl mit niedriger Dichte als auch mit niedriger Wärmeleitfähigkeit verarbeitet werden können, welche gute Verarbeitungseigenschaften, gute physikalische Eigenschaften und insbesondere sehr gute Brandschutzeigenschaften aufweisen.

Die Aufgabe wurde gelöst durch teilchenförmige, expandierbare Styrolpolymerisate, die 0,05 bis 8 Gew.-% Graphitpartikel mit einer mittleren Partikelgröße von 1 bis 50 µm in homogener Verteilung enthalten und zu Schaumstoffen mit einer Dichte von < 35 g/l verarbeitet werden können, welche vorzugsweise selbstverlöschend sind und den Brandtest B2 (nach DIN 4102) bestehen.

Gegenstand der Erfindung sind weiterhin Verfahren zur Herstellung der expandierbaren Styrolpolymerisate sowie die aus ihnen hergestellten Polystyrol-Partikelschäume.

Unter expandierbaren Styrolpolymerisaten werden Treibmittel enthaltende Styrolpolymerisate verstanden.

Die erfindungsgemäßen expandierbaren Styrolpolymerisate enthalten als Polymermatrix insbesondere Homopolystyrol oder Styrolcopolymerisate mit bis zu 20 Gew.-%, bezogen auf das Gewicht der Polymeren, an ethylenisch ungesattigten Comonomeren, insbesondere Alkylstyrole, Divinylbenzol, Acrylnitril oder α-Methylstyrol. Auch Blends aus Polystyrol und anderen Polymeren, insbesondere mit Kautschuk und Polyphenylenether sind moglich.

Die Styrolpolymerisate konnen die üblichen und bekannten Hilfsmittel und Zusatzstoffe enthalten, beispielsweise Flammschutzmittel, Keimbildner, UV-Stabilisatoren, Kettenüberträger, Treibmittel, Weichmacher, Pigmente und Antioxidantien.

Die expandierbaren Partikel werden mit den üblichen und bekannten Beschichtungsmitteln beschichtet, beispielsweise Metallstearaten, Glycerinestern und feinteiligen Silikaten.

Die Partikelgröße liegt bevorzugt im Bereich von 0,2 - 2 mm.

Der eingesetzte Graphit hat eine mittlere Partikelgröße von 1 bis 50 µm, insbesondere von 2,5 bis 12 µm, ein Schüttgewicht von 100 bis 500 g/l und eine spezifische Oberfläche von 5 bis 20 m²/g. Es kann Naturgraphit oder gemahlener synthetischer Graphit eingesetzt werden. Die Graphitpartikel sind im Styrolpolymerisat in Mengen von 0,05 bis 8 Gew.-% enthalten. Überraschenderweise hat sich gezeigt, daß Graphitpartikel selbst in Mengen von weniger als 0,5 Gew.-% wirksam sind.

Ein Problem bei der Verwendung von Graphitpartikeln besteht in der leichten Brennbarkeit der Graphitpartikel enthaltenden Polystyrolpartikelschaumstoffe. So war es bislang nicht möglich, mit Graphit enthaltenden Polystyrolschaumstoffen die für den Einsatz im Bauwesen notwendigen Brandtests (B1 und B2 nach DIN 4102) zu bestehen.

Zur Behebung dieses Mangels werden in einer bevorzugten Ausführungsform der Erfindung den expandierbaren Styrolpolymerisaten Flammschutzmittel, insbesondere solche auf Basis organischer Bromverbindungen, zugesetzt. Der Zusatz der Bromverbindung (ohne Synergist) sollte in einer Menge von mehr als 3 Gew.-%, bezogen auf das Gewicht der expandierbaren Styrolpolymerisate, erfolgen. Mit der üblichen Menge Flammschutzmittel wird B1 und B2 verfehlt.

Die organischen Bromverbindungen sollen einen Bromgehalt von ≥ 70 Gew.-% aufweisen.

Überraschenderweise führt diese Menge an Flammschutzmitteln zu keinerlei Beeintrachtigung der mechanischen Kennwerte der Graphit enthaltenden Polystyrolpartikelschaumstoffe.

Insbesondere geeignet sind aliphatische, cycloaliphatische und aromatische Bromverbindungen, wie Hexabromcyclododecan, Pentabrommonochlorcyclohexan, Pentabromphenylallylether.

Die Wirkung der bromhaltigen Flammschutzmittel wird durch Zusatz von C-C- oder O-O-labilen organischen Verbindungen erheblich verbessert. Beispiele geeigneter Flammschutzsynergisten sind Dicumyl und Dicumylperoxid. Eine bevorzugte Kombination besteht aus 0,6 bis 5 Gew.-% organischer Bromverbindung und 0,1 bis 1,0 Gew.-% der C-C- oder O-O-labilen organischen Verbindung.

Die Herstellung der erfindungsgemäßen expandierbaren Styrolpolymerisate kann nach unterschiedlichen Verfahren erfolgen.

Bei einer bevorzugten Ausführungsform vermischt man die Graphitpartikel mit einer Schmelze des Styrolpolymerisates, vorzugsweise in einem Extruder. Dabei wird gleichzeitig das Treibmittel in die Schmelze zudosiert. Man kann die Graphitpartikel auch in eine Schmelze von treibmittelhaltigem Styrolpolymerisat einarbeiten, wobei zweckmäßigerweise ausgesiebte Randfraktionen eines Perlspektrums von bei einer Suspensionspolymerisation entstandenen treibmittelhaltigen Polystyrolperlen eingesetzt werden. Die Treibmittel und Graphitpartikel enthaltende Polystyrolschmelze wird ausgepreßt und zu treibmittelhaltigem Granulat zerkleinert. Da Graphit stark nukleierend wirkt, sollte nach dem Auspressen unter Druck rasch abgekühlt werden, um ein Aufschäumen zu vermeiden. Man führt daher zweckmäßigerweise eine Unterwassergranulierung unter Druck durch.

Es ist auch möglich, den Graphitpartikel enthaltenden Styrolpolymerisaten das Treibmittel in einem gesonderten Verfahrenschritt zuzusetzen. Hierbei werden die Granuläte dann vorzugsweise in wäßriger Suspension mit dem Treibmittel imprägniert.

In allen drei Fällen kann man die feinteiligen Graphitpartikel direkt der Polystyrolschmelze zusetzen. Man kann die Graphitpartikel auch in Form eines Konzentrats in Polystyrol der Schmelze zusetzen. Bevorzugt werden aber Polystyrolgranulat und Graphitpartikel zusammen in einen Extruder eingegeben, das Polystyrol aufgeschmolzen und mit dem Graphit vermischt.

Es ist grundsatzlich auch möglich, die Graphitpartikel bereits im Verlauf der Suspensionspolymerisation zu inkorporieren. Sie können hierbei vor der Suspendierung dem monomeren Styrol zugesetzt oder im Verlaufe, bevorzugt während der ersten Hälfte des Polymerisationszyklus, dem Reaktionsansatz zugefügt werden. Das Treibmittel wird bevorzugt im Verlaufe der Polymerisation zugegeben, es kann jedoch auch hinterher dem Styrolpolymerisat einverleibt werden. Dabei hat es sich gezeigt, daß es für die Stabilität der Suspension günstig ist, wenn bei Beginn der Suspensionspolymerisation eine Lösung von Polystyrol (bzw. einem entsprechenden Styrolcopolymerisat) in Styrol (bzw. der Mischung von Styrol mit Comonomeren) vorliegt. Bevorzugt geht man dabei von einer 0,5 bis 30, insbesondere 5 bis 20 gew.-%igen Losung von Polystyrol in Styrol aus. Man kann dabei frisches Polystyrol in Monomeren auflösen, zweckmäßigerweise setzt man aber sogenannte Randfraktionen ein, die bei der Auftrennung des bei der Herstellung von expandierbarem Polystyrol anfallenden Perlspektrums als zu große oder zu kleine Perlen ausgesiebt werden. In der Praxis haben derartige nicht verwertbare Randfraktionen Durchmesser von größer als 2,0 mm bzw. kleiner als 0,2 mm. Auch Polystyrol-Recyclat und Schaumpolystyrol-Recyclat können eingesetzt werden. Eine andere Möglichkeit besteht darin, daß man Styrol in Substanz bis zu einem Umsatz von 0,5 bis 70 % vorpolymerisiert und das Vorpolymerisat zusammen mit den Graphitpartikeln in der wässrigen Phase supendiert und auspolymerisiert.

Das Treibmittel wird in den üblichen Mengen von etwa 3 - 10 Gew.-%, bezogen auf das Gewicht des Polymeren, zugesetzt. Als Treibmittel eingesetzt werden üblicherweise aliphatische Kohlenwasserstoffe mit 3 bis 10, vorzugsweise 4 bis 6 Kohlenstoffatomen.

Die erfindungsgemäßen expandierbaren, Graphit enthaltenden Styrolpolymerisate können zu Polystyrolschaumstoffen mit Dichten von 5 - 35 g/l, bevorzugt von 8 bis 25 g/l und insbesondere von 10 - 15 g/l, verarbeitet werden.

Hierzu werden die expandierbaren Partikel vorgeschäumt. Dies geschieht zumeist durch Erwärmen der Partikel mit Wasserdampf in sogenannten Vorschäumern.

Die so vorgeschäumten Partikel werden danach zu Formkörpern verschweißt. Hierzu werden die vorgeschäumten Partikel in nicht gasdicht schließende Formen gebracht und mit Wasserdampf beaufschlagt. Nach Abkühlen können die Formteile entnommen werden.

Ein weiterer überraschender Effekt des Zusatzes von Graphitpartikeln besteht darin, daß dadurch die Kühlzeit beim Entformen von verschweißten Schaumstoffblöcken verringert werden kann. So führt beispielsweise ein Zusatz von 0,5 bis 5 Gew.-% Graphit zu einer Verkürzung der Kühlzeit von 10 bis 90 %.

Die aus den erfindungsgemäßen expandierbaren Styrolpolymerisaten hergestellten Schaumstoffe zeichnen sich durch eine hervorragende Wärmeisolierung aus. Dieser Effekt zeigt sich besonders deutlich bei niedrigen Dichten. So konnte durch Zusatz von 2 Gew.-% Graphit zu einem expandierbaren Styrolpolymerisat mit einer Dichte des Schaumstoffs von 10 g/l die Wärmeleitfähigkeit von 44 mW/m·K auf unter 35 mW/m·K gesenkt werden.

Ein weiterer Gegenstand der Erfindung sind Polystyrolpartikelschaumstoffe mit einer Dichte von < 35 g/l, die in homogener Verteilung 0,05 bis 25 Gew.-% Graphitpartikel enthalten, deren Wärmeleitfähigkeit soweit erniedrigt ist, daß sie den Anforderungen der Wärmeleitklasse 035 (nach DIN 18 164, Teil 1, Tabelle 4) genügen, und die vorzugsweise selbstverlöschend sind und den Brandtest B2 (nach DIN 4102) erfüllen.

Durch die Möglichkeit, bei gleicher Wärmeleitfähigkeit die Dichte der Styrolpolymerisate deutlich zu verringern, lassen sich Materialeinsparungen realisieren. Da im Vergleich mit herkömmlichen expandierbaren Styrolpolymerisaten die gleiche Wärmedämmung mit wesentlich geringeren Schüttdichten erreicht werden kann, können mit dem erfindungsgemäß hergestellten expandierbaren Polystyrolpartikeln dünnere Schaumstoffplatten eingesetzt werden, was eine Raumeinsparung ermöglicht.

Überraschenderweise lassen sich die erfindungsgemäßen expandierbaren Styrolpolymerisate völlig problemlos zu Schaumstoffen geringer Dichte verarbeiten. Es kommt weder zu Treibmittelverlusten noch zu Störungen der Zellstruktur der Schaumstoffe, obwohl der Fachmann annehmen mußte, daß der Graphit als Keimbildner wirkt und zu einer unerwunschten Feinzelligkeit des Schaumes und schlechter Verschweißung führen würde. Außerdem lassen sich trotz des Zusatzes von Graphitpartikeln selbstverlöschende Schaumstoffe herstellen, die den Brandtest B2 und in den meisten Fällen auch B1 bestehen.

Aufgrund der Einbindung der Graphitpartikel in die Polymermatrix kommt es zu keinem Abrieb des Graphits und somit zu keiner Verschmutzung beim Arbeiten mit solchen Bauteilen.

Die erfindungsgemäßen Schaumstoffe können zur Wärmedämmung von Gebäuden und Gebaudeteilen, zur thermischen Isolierung von Maschinen und Haushaltsgeräten sowie als Verpackungsmaterialien verwendet werden.

Die Erfindung soll an nachstehenden Beispielen näher erlautert werden. Die genannten Teile und Prozente beziehen sich auf das Gewicht.

### Beispiel 1

In einem druckfesten Rührkessel werden 0,498 kg EPS-Randfraktion in 16,6 kg Styrol gelöst und 16,6 g pulverformiges Graphit (Graphitwerk Kropfmühl KG, UF2 96/97), d.h. 0,1 % Graphit, bezogen auf die summierte Styrol- und EPS-Menge, homogen suspendiert unter Beimischung von 83,0 Dicumylperoxid und 4,15 g Dibenzoylperoxid, sowie 112,033 g Hexabromcyclododecan (HBCD). Die organische Phase wird in 19,3 l vollentsalztes Wasser in einem 50 l Rührkessel eingebracht. Die wäßrige Phase enthält 46,127 g Natriumpyrophosphat und 86,348 g Magnesiumsulfat (Bittersalz). Die Suspension wird binnen 140 Minuten auf 80°C erhitzt. Dann werden 2,32 g Emulgator K 30/40 (Bayer AG) zugegeben. Nach weiteren 40 Minuten werden 1330 g Pentan zudosiert und bei 126°C auspolymerisiert.

Nach dem Abtrennen der wäßrigen Phase erhält man homogen gräulich eingefärbte Perlen mit einem mittleren Durchmesser von 1,18 mm. Die Perlen erreichen nach zweimaligem Vorschäumen mit Wasserdampf ein Litergewicht von 10,0 g. Der Innenwassergehalt ist < 1,5 % und der Reststyrolgehalt < 1000 ppm. Die vorgeschaumten Perlen werden mit Wasserdampf zu Schaumstoffblöcken verschweißt. Die Wärmeleitfähigkeit bei einer Dichte von 10 g/l, (Poensgen-Methode), beträgt 42 mW/m·K.

### Beispiel 2 (Vergleich)

Beispiel 1 wurde wiederholt ohne Zugabe von Graphit. Die Wärmeleitzahl bei einer Dichte von 10 g/l betrug 44 mW/m·K.

### Beispiel 3

In einem druckfesten Rührkessel wurde eine Mischung aus 150 Teilen vollentsalztem Wasser, 0,1 Teilen Natriumpyrophosphat, 100 Teilen Styrol, 0,45 Teilen Benzoylperoxid, 0,15 Teilen tert.-Butylperbenzoat, sowie 5 Teilen Kropfmühl-Pulvergrahpit UFZ 99.5, 2 Teilen Hexabromcyclododecan (HBCD) und 0,4 Teilen Dicumylperoxid unter Rühren auf 90°C erhitzt.

Nach 2 Stunden bei 90°C wurden 4 Teile einer 10 %igen wäßrigen Lösung von Polyvinylpyrrolidon zugegeben.

Dann wurde weitere 2 Stunden bei 90°C gerührt und 7 Teile einer Mischung aus 80 % n-Pentan und 20 % iso-Pentan zugegeben. Anschließend wurde 2 Stunden bei 110°C und schließlich 2 Stunden bei 140°C gerührt.

Die erhaltenen expandierbaren Polystyrolperlen wurden mit vollentsalztem Wasser gewaschen auf 0,7 - 1,0 mm ausgesiebt und anschließend mit Warmluft getrocknet.

Durch Einwirkung von strömendem Wasserdampf wurden die Perlen vorgeschäumt und nach eintägiger Lagerung durch weitere Behandlung mit Wasserdampf in einer geschlossenen Form zu Schaumstoffblöcken einer Dichte von 15 g/l verschweißt.

Die Messung der Wärmeleitzahlen wurde bei 10°C nach DIN 52612 durchgeführt. Es ergab sich ein Wert von 34 mW/m·K.

### Beispiel 4

In 17,03 kg Styrol werden 2,55 kg Polystyrol (PS 158 K der BASF) gelöst und 196 g pulverförmiges Graphit (Graphitwerk Kropfmühle KG, UF2 96/97), d.h. 6 % Graphit bezogen auf die summierte Styrol- und Polystyrolmenge, homogen suspendiert unter Beimischung von 59,6 g Dicumylperoxid und 20,4 g Dibenzoylperoxid. Die organische Phase wird in 19,5 l vollentsalztes Wasser in einem 50 l Rührkessel eingebracht. Die wäßrige Phase enthält 69,8 g Natriumpyrophosphat und 129,5 g Magnesiumsulfat. Man dosiert 195,8 g Pentan zur Suspension, welche dann auf 80 °C erhitzt wird. Nach 140 Minuten wird 3,51 g Emulgator K 30/40 (Bayer AG) zugeben. Nach weiteren 30 Minuten wird 1175,1 g Pentan nachdosiert und bei 134 °C auspolymerisiert. Nach dem Abtrennen der wäßrigen Phase erhält man homogen dunkel eingefärbte Perlen mit einem mittleren Durchmesser von 0,82 mm. Die Perlen lassen sich mit Wasserdampf auf ein Litergewicht von 10,2 g nach 3 Minuten schäumen. Die Messung der Warmeleitzahl wurde an Schaumstoffblöcken bei 10 °C nach DIN 52 612 durchgeführt. Ergebnis siehe Tabelle 1.

### Beispiel 5

Beispiel 4 wurde wiederholt mit 4 % Graphit.

### Beispiel 6

Beispiel 4 wurde wiederholt mit 2 % Graphit.

### Beispiel 7

Beispiel 4 wurde wiederholt mit 1 % Graphit.

### Beispiel 8

Beispiel 4 wurde wiederholt mit 0,5 % Graphit.

### Beispiel 9

Beispiel 4 wurde wiederholt mit 0,2 % Graphit.

### Beispiel 10 (Vergleich)

Beispiel 4 wurde ohne Zusatz von Graphit durchgeführt.

**Tabelle 1**

| Beispiel | Graphit % | Dichte g/l | Wärmeleitzahl mW/m·K |
|---|---|---|---|
| 4 | 6 | 10,2 | 32 |
| 5 | 4 | 10,0 | 33 |
| 6 | 2 | 10,5 | 35 |
| 7 | 1 | 10,8 | 36 |
| 8 | 0,5 | 10,2 | 38 |
| 9 | 0,2 | 10,0 | 40 |
| 10 | - | 10,2 | 44 |

### Beispiel 11

Beispiel 4 wurde wiederholt, wobei als Flammschutzmittelsystem 127 g Hexabromcyclododecan und 85 g Dicumyl zugesetzt wurden. Die Polymerisation wurde bei 125°C durchgeführt. Es ergab sich eine Wärmeleitzahl von 34 mW/m·K. Die Brandschutzklasse B 2 wurde erreicht.

### Beispiel 12 bis 14

Polystyrol mit einem mittleren Molekulargewicht (M_{w}) von 220000 (PS 148 H BASF) und einem Gehalt an 2,1 % HBCD und 0,42 % Dicumyl wurde unter Zusatz der in Tabelle 1 angegebenen Mengen an Graphit als 20%iger batch in Polystyrol in einem beheizten Zweiwellenextruder bei 180°C plastifiziert und durch eine Düsenplatte von 1 mm Durchmesser gepreßt. Die Strange wurden in einem Wasserbad zum Erstarren gebracht und anschließend mittels rotierender Messer auf eine Teilchengröße von 2x2x2 mm granuliert.

6000 g dieses Granulats wurden zusammen mit 21300 g vollentsalztem Wasser, 76 g Natriumpyrophosphat, 155 g Magnesiumsulfat-Heptahydrat und 50 g einer 40 %igen Losung eines Alkylenbenzolsulfonates (Mersolat K 30, Bayer AG) in einen 50 l fassenden Rührkessel gegeben.

Dieser wurde verschlossen und unter Rühren bei 250 Upm auf 120°C aufgeheizt. Nach Erreichen dieser Temperatur wurden während einer Dauer von 15 Minuten 500 g eines Gemisches aus 80 % n-Pentan und 20 % iso-Pentan in den Kessel gedrückt und weitere 6 Stunden bei 120°C gerührt. Die erhaltenen expandierbaren Perlen wurden gewaschen, gesiebt auf 0,7 - 1 mm, getrocknet und zu Schaumstoffblöcken verarbeitet. Bei einer Dichte von 10,1 g/l ergab sich eine Wärmeleitzahl von 32 mW/m·K. Der B2-Test wurde bestanden.

Im Beispiel 13 wurde das Flammschutzmittel weggelassen. Der B2-Test wurde nicht bestanden.

Im Vergleichsbeispiel 14 wurde der Graphit weggelassen. Die Warmeleitzahl betrug 43 mW/m·K.

### Beispiele 15 bis 18

Zu aufgeschmolzenem Polystyrol mit einem mittleren Molekulargewicht (M_{w}) von 220000 und einem Gehalt von 2,1 % HBCD und 0,42 % Dicumyl wurden in einem beheizten Zweischneckenextruder bei einer Massetemperatur von etwa 160°C 2 % Graphit sowie 5,0 % einer Mischung aus 80 % n-Pentan und 20 % iso-Pentan zudosiert. Die homogenisierte Mischung wurde bei einer Massetemperatur von 180°C durch eine Düsenplatte von 0,8 mm Düsendurchmesser gepreßt. An die Düsenplatte war ein Unterwassergranulator angebaut. Mittels eines rotierenden Messers wurde bei 5 bar Druck die austretende Schmelze granuliert. Es wurden Perlen mit einem Durchmesser von 1,5 mm erhalten.

In Beispiel 15 wurde auf eine Dichte von 10,3 g/l, in Beispiel 16 (bei kürzerer Bedampfungsdauer) auf eine Dichte von 15 g/l geschaumt. Die Warmeleitzahlen betrugen 34 bzw. 32 mW/m·K. Der B2-Test wurde jeweils bestanden.

In Beispiel 17 wurde das Flammschutzmittel weggelassen, in Vergleichsbeispiel 18 auch der Graphit.

Die Wärmeleitzahlen betrugen 34 bzw. 44 mW/m·K. Der B2-Test wurde jeweils nicht bestanden.

### Beispiel 19

Polystyrol PS 158 K (BASF AG) wurde zusammen mit 2 % Graphit, 1,4 % HBCD sowie 0,7 % Dicumyl in einen Zweischnecken-Extruder (ZSK 53) dosiert. Zu der Schmelze im Extruder wurden zusätzlich noch 5 % Pentan zugemischt. Die aus der Extruderdüse austretende Schmelze wurde mittels eines Unterwassergranulators der Firma Gala (USA) granuliert. Die Granulierung wurde unter 5 bar Druck durchgeführt. Dieser Druck wurde über eine Drossel (Schlauch mit 50 m Länge) erzielt, die zwischen Granulierung und Trockner eingebaut war. Es wurde perlförmiges schwarzes Granulat erhalten mit einem mittleren Durchmesser von etwa 1,5 mm. Durch Aufschäumen und Versintern der Schaumpartikel hergestellte Formteile besaßen bei einer Dichte von 13 g/l eine Wärmeleitfähigkeit von 35 mW/m·K.

### Vergleichsbeispiel 20

### Oberflachenbeschichtung mit Graphit

In einem Mischaggregat wurden vorgeschäumte EPS-Perlen mit 2,0 % Graphit versetzt. Es zeigte sich eine unvollständige Beschichtung und ungleichmäßige Verteilung des Graphits auf der Perlenoberfläche. Bei der Weiterverarbeitung wurde ein starker Abrieb des Graphits von der Perlenoberfläche beobachtet. Durch den Einsatz von Bindemitteln (Glyzerinstearat, Weißöl) konnte keine qualitative Verbesserung der Beschichtungsergebnisse erreicht werden. Die Verschweißung der Formteile war unbefriedigend.

## Patentansprüche

1. Teilchenförmige expandierbare Styrolpolymerisate, die zu Schaumstoffen mit einer Dichte von ≤ 35 g/l verarbeitet werden können, dadurch gekennzeichnet, daß sie 0,05 bis 8 Gew.-% Graphitpartikel mit einer mittleren Partikelgröße von 1 bis 50 µm in homogener Verteilung enthalten.

2. Teilchenförmige expandierbare Styrolpolymerisate nach Anspruch 1, dadurch gekennzeichnet, daß sie eine organische Bromverbindung mit einem Bromgehalt von ≥ 70 Gew.-% als Flammschutzmittel enthalten und zu selbstverlöschenden Schaumstoffen verarbeitet werden können, die den Brandtest B2 (nach DIN 4102) bestehen.

3. Teilchenförmige expandierbare Styrolpolymerisate nach Anspruch 1, dadurch gekennzeichnet, daß sie 0,6 bis 5 Gew.-%, bezogen auf das Polymere, einer organischen Bromverbindung mit einem Bromgehalt von ≥ 70 Gew.-% als Flammschutzmittel und 0,1 bis 1,0 Gew.-%, bezogen auf das Polymere, einer C-C- oder O-O-labilen organischen Verbindung als Flammschutzsynergist enthalten.

4. Teilchenförmige expandierbare Styrolpolymerisate nach Anspruch 3, dadurch gekennzeichnet, daß die organische Bromverbindung ausgewählt ist aus bromierten aliphatischen, cycloaliphatischen oder aromatischen Verbindungen, vorzugsweise Hexabromcyclododecan, Pentabrommonochlorcyclohexan oder Pentabromphenylallylether.

5. Teilchenförmige expandierbare Styrolpolymerisate nach Anspruch 3, dadurch gekennzeichnet, daß der Flammschutzsynergist Dicumyl oder Dicumylperoxid ist.

6. Teilchenförmige expandierbare Styrolpolymerisate nach Anspruch 1, dadurch gekennzeichnet, daß sie als Treibmittel 3 bis 10 Gew.-% eines Kohlenwasserstoffs mit 3 bis 10 Kohlenstoffatomen enthalten.

7. Verfahren zur Herstellung der expandierbaren Styrolpolymerisate nach Anspruch 1, dadurch gekennzeichnet, daß in einem Extruder Graphitpartikel und Treibmittel mit geschmolzenem Polystyrol vermischt werden, und danach die Schmelze ausgepreßt, abgekühlt und granuliert wird.

8. Verfahren zur Herstellung der expandierbaren Styrolpolymerisate nach Anspruch 1, dadurch gekennzeichnet, daß in einem Extruder Graphitpartikel mit geschmolzenem, treibmittelhaltigem Polystyrol vermischt werden, und danach die Schmelze ausgepreßt, abgekühlt und granuliert wird.

9. Verfahren zur Herstellung der expandierbaren Styropolymerisate nach Anspruch 1, dadurch gekennzeichnet, daß in einem Extruder Graphitpartikel mit geschmolzenem Polystyrol vermischt, die Schmelze danach ausgepreßt, abgekühlt und granuliert und das Granulat in wäßriger Suspension mit Treibmittel nachimprägniert wird.

10. Verfahren zur Herstellung von Polystyrolschaumstoffen, dadurch gekennzeichnet, daß Graphitpartikel enthaltende expandierbare Styrolpolymerisate nach Anspruch 1 auf eine Dichte von ≤ 35 g/l aufgeschäumt werden.

11. Polystyrolpartikelschaumstoffe einer Dichte von ≤ 35 g/l, dadurch gekennzeichnet, daß sie in homogener Verteilung 0,05 bis 8 Gew.-% Graphitpartikel mit einer mittleren Partikelgröße von 1 bis 50 µm enthalten, und daß ihre Wärmeleitfähigkeit so weit erniedrigt ist, daß sie den Anforderungen der Wärmeleitklasse 035 (nach DIN 18164), Teil 1, Tab. 4) genügen.

12. Polystyrolpartikelschaumstoffe nach Anspruch 11 mit einer Dichte von ≤ 35 g/l, enthaltend - jeweils bezogen auf das Polymere -
| | |
|---|---|
| 2 bis 8 Gew.-% | Graphitpartikel, |
| 0,6 bis 5 Gew.-% | einer organischen Bromverbindung mit einem Bromgehalt von ≥ 70 Gew.-%, |
| 0,1 bis 1,0 Gew.-% | einer C-C- oder O-O-labilen Verbindung, |
dadurch gekennzeichnet, daß sie selbstverlöschend sind und den Brandtest B 2 (nach DIN 4102) erfüllen, und daß ihre Wärmeleitfähigkeit so weit erniedrigt ist, daß sie den Anforderungen der Wärmeleitklasse 035 (nach DIN 18 164, Teil 1, Tab. 4) genügen.

13. Verwendung der Polystyrolpartikelschaumstoffe nach Anspruch 11 zur Wärmedämmung von Gebäuden und Gebäudeteilen.

14. Verwendung der Polystyrolpartikelschaumstoffe nach Anspruch 11 zur thermischen Isolierung von Maschinen und Haushaltsgeräten.

15. Verwendung der Polystyrolpartikelschaumstoffe nach Anspruch 11 als Verpackungsmaterialien.

## Claims

1. A particulate expandable styrene polymer which can be processed to give foams having a density of ≤ 35 g/l and contains from 0.05 to 8% by weight of homogeneously distributed graphite particles having a mean particle size of from 1 to 50 µm.

2. A particulate expandable styrene polymer as claimed in claim 1 which contains an organic bromine compound having a bromine content of ≥ 70% by weight as flame retardant and can be processed to give self-extinguishing foams which pass the burning test B2 (in accordance with DIN 4102).

3. A particulate expandable styrene polymer as claimed in claim 1 which contains from 0.6 to 5% by weight, based on the polymer, of an organic bromine compound having a bromine content of ≥ 70% by weight as flame retardant and from 0.1 to 1.0% by weight, based on the polymer, of a C-C- or O-O-labile organic compound as flame retardant synergist.

4. A particulate expandable styrene polymer as claimed in claim 3, wherein the organic bromine compound is selected from the group consisting of brominated aliphatic, cycloaliphatic or aromatic compounds, preferably hexabromocyclododecane, pentabromomonochlorocyclohexane or pentabromophenyl allyl ether.

5. A particulate expandable styrene polymer as claimed in claim 3, wherein the flame retardant synergist is bicumyl or dicumyl peroxide.

6. A particulate expandable styrene polymer as claimed in claim 1 which contains from 3 to 10% by weight of a hydrocarbon having from 3 to 10 carbon atoms as blowing agent.

7. A process for producing an expandable styrene polymer as claimed in claim 1, which comprises mixing graphite particles and blowing agent with molten polystyrene in an extruder and then extruding the melt and cooling and granulating it.

8. A process for producing an expandable styrene polymer as claimed in claim 1, which comprises mixing graphite particles with molten polystyrene containing blowing agent in an extruder and then extruding the melt and cooling and granulating it.

9. A process for producing an expandable styrene polymer as claimed in claim 1, which comprises mixing graphite particles with molten polystyrene in an extruder, then extruding the melt and cooling and granulating it and subsequently impregnating the granules in aqueous suspension with blowing agents.

10. A process for producing polystyrene foams, which comprises foaming expandable styrene polymers as claimed in claim 1 containing graphite particles to a density of ≤ 35 g/l.

11. An expanded polystyrene foam having a density of ≤ 35 g/l, containing from 0.05 to 8% by weight of homogeneously distributed graphite particles having a mean particle size of from 1 to 50 µm and having a thermal conductivity which is reduced sufficiently for the foam to meet the requirements of thermal conductivity class 035 (in accordance with DIN 18164, Part 1, Table 4).

12. An expanded polystyrene foam as claimed in claim 11 having a density of ≤ 35 g/l and containing, in each case based on the polymer,
| | |
|---|---|
| from 2 to 8% | by weight of graphite particles, |
| from 0.6 to 5% | by weight of an organic bromine compound having a bromine content of ≥ 70% by weight, and |
| from 0.1 to 1.0% | by weight of a C-C- or O-O-labile compound, |
which is self-extinguishing and meets the burning test B2 (in accordance with DIN 4102) and whose thermal conductivity is reduced sufficiently for it to meet the requirements of thermal conductivity class 035 (in accordance with DIN 18 164, Part 1, Table 4).

13. The use of an expanded polystyrene foam as claimed in claim 11 for the thermal insulation of buildings and parts of buildings.

14. The use of an expanded polystyrene foam as claimed in claim 11 for the thermal insulation of machines and domestic appliances.

15. The use of an expanded polystyrene foam as claimed in claim 11 as packaging material.

## Revendications

1. Polymères de styrène expansibles particulaires que l'on peut transformer en mousses dont la densité est ≤ 35 g/l, caractérisés en ce qu'ils contiennent des particules de graphite jusqu'à concurrence de 0,05 à 8 % en poids possédant une granulométrie moyenne de 1 à 50 µm dans le cadre d'une distribution homogène.

2. Polymères de styrène expansibles particulaires selon la revendication 1, caractérisés en ce qu'ils contiennent un composé de brome organique dont la teneur en brome est ≥ 70 % en poids à titre d'agent retardateur des flammes et peuvent être transformés en mousses auto-extinctrices qui réussissent l'essai B2 de résistance au feu (selon la norme DIN 4102).

3. Polymères de styrène expansibles particulaires selon la revendication 1, caractérisés en ce qu'ils contiennent, à concurrence de 0,6 à 5 % en poids rapportés au polymère, un composé de brome organique dont la teneur en brome est ≥ 70 % en poids à titre d'agent retardateur des flammes et, à concurrence de 0,1 à 1,0 % en poids rapportés au polymère, un composé organique labile contenant une liaison C-C ou O-O à titre d'agent synergique retardateur des flammes.

4. Polymères de styrène expansibles particulaires selon la revendication 3, caractérisés en ce que le composé de brome organique est choisi parmi le groupe comprenant des composés bromés aliphatiques, cycloaliphatiques ou aromatiques, de préférence l'hexabromocyclododécane, le pentabromomonochlorocyclohexane ou l'éther pentabromophénylallylique.

5. Polymères de styrène expansibles particulaires selon la revendication 3, caractérisés en ce que l'agent synergique retardateur des flammes est le dicumyle ou le peroxyde de dicumyle.

6. Polymères de styrène expansibles particulaires selon la revendication 1, caractérisés en ce qu'ils contiennent, à titre d'agent moussant, un hydrocarbure contenant de 3 à 10 atomes de carbone, à concurrence de 3 à 10 % en poids.

7. Procédé pour la préparation des polymères de styrène expansibles selon la revendication 1, caractérisé en ce qu'on mélange dans une extrudeuse des particules de graphite et un agent moussant avec du polystyrène en fusion, puis on éjecte la masse fondue, on la refroidit et on la granule.

8. Procédé pour la préparation des polymères de styrène expansibles selon la revendication 1, caractérisé en ce qu'on mélange dans une extrudeuse des particules de graphite avec du polystyrène en fusion contenant un agent moussant, puis on éjecte la masse fondue, on la refroidit et on la granule.

9. Procédé pour la préparation des polymères de styrène expansibles selon la revendication 1, caractérisé en ce qu'on mélange dans une extrudeuse des particules de graphite avec du polystyrène en fusion, puis on éjecte la masse fondue, on la refroidit et on la granule et on imprègne ultérieurement le produit de granulation en suspension aqueuse avec un agent moussant.

10. Procédé pour la préparation de mousses de polystyrène, caractérisé en ce qu'on transforme en mousse des polymères de styrène expansibles contenant des particules de graphite selon la revendication 1, pour obtenir une densité ≤ 35 g/l.

11. Mousses particulaires de polystyrène dont la densité est ≤ 35 g/l, caractérisées en ce qu'elles contiennent, dans le cadre d'une distribution homogène, des particules de graphite jusqu'à concurrence de 0,05 à 8 % en poids possédant une granulométrie moyenne de 1 à 50 µm, et en ce que leur conductibilité thermique a été à ce point réduite qu'elles satisfont aux exigences de la classe de conductibilité thermique 035 (selon la norme DIN 18 164, partie 1, tableau 4).

12. Mousses particulaires de polystyrène selon la revendication 11 possédant une densité ≤ 35 g/l, contenant - chaque fois rapportés au polymère -
à concurrence de 2 à 8 % en poids, des particules de graphite,
à concurrence de 0,6 à 5 % en poids, un composé de brome organique dont la teneur en brome est ≥ 70 % en poids,
à concurrence de 0,1 à 1,0 % en poids, un composé labile possédant une liaison C-C ou O-O,
caractérisées en qu'elles sont auto-extinctrices et réussissent l'essai B2 de résistance au feu (selon la norme DIN 4102), et en ce que leur conductibilité thermique a été à ce point réduite qu'elles satisfont aux exigences de la classe de conductibilité thermique 035 (selon la norme DIN 18 164, partie 1, tableau 4).

13. Utilisation des mousses particulaires de polystyrène selon la revendication 11 pour l'isolation thermique de bâtiments et de parties de bâtiments.

14. Utilisation des mousses particulaires de polystyrène selon la revendication 11 pour l'isolation thermique de machines et d'appareils ménagers.

15. Utilisation des mousses particulaires de polystyrène selon la revendication 11 comme matières d'emballage.
